# EUROPÄISCHE PATENTANMELDUNG

(11) **EP 1 103 312 A2**
(43) Veröffentlichungstag der Anmeldung: **30.05.2001**
(21) Anmeldenummer: 00125675.9
(22) Anmeldetag: 23.11.2000
(51) Int. Cl.: B05D 5/08, A47J 36/02

(54) **Verfahren zur Oberflächenbeschichtung**

(30) Priorität: 25.11.1999 DE 19956755
(71) Anmelder: VESTA AG & Co. oHG, D-55743 Idar-Oberstein (DE)
(72) Erfinder: Fissler, Harald, 55743 Idar-Oberstein (DE)
(74) Vertreter: KEIL & SCHAAFHAUSEN

(57) **Zusammenfassung**

Die Erfindung bezieht sich auf ein Verfahren zum Versehen der Oberfläche eines Gegenstandes, insbesondere eines Haushalts- oder Küchengerätes, mit einer organischen Antihaftschicht, bei welchem ein Schichtmaterial auf die Oberfläche aufgetragen und anschließend durch Druckausübung mechanisch bearbeitet wird, wobei das Schichtmaterial zunächst z.B. durch Sintern oder Vernetzen vollständig ausgehärtet und erst dann bei Umgebungstemperatur mittels der Druckausübung verdichtet wird.

## Beschreibung

Die Erfindung bezieht sich auf ein Verfahren zum Versehen der Oberfläche eines Gegenstandes, insbesondere eines Haushalts- oder Küchengerätes, mit einer organischen Antihaftschicht, bei welchem ein Schichtmaterial auf die Oberfläche aufgetragen und anschließend durch Druckausübung mechanisch bearbeitet wird. Derartige Antihaftbeschichtungen finden insbesondere bei Pfannen, Töpfen, Brätern und Backblechen Anwendung.

Um oft nur schwer zu entfernende Materialanhaftungen zu vermeiden, werden die Oberflächen von Haushalts- und Küchengeräten häufig mit Antihaftschichten versehen. Aus der DE 40 02 717 A1 ist ein Verfahren zum Beschichten von Haus- und Küchengerätschaften, insbesondere von Bügeleisensohlen, mit einer Antihaftschicht bekannt, bei dem auf eine metallene Oberfläche der Gerätschaft zunächst eine Hartstoffschicht und alsdann die Antihaftschicht aufgebracht wird, wobei die Antihaftschicht als Flüssigkeit auf die Hartstoffschicht aufgetragen und danach einer Wärmebehandlung unterzogen wird. Die Antihaftschicht wird dabei zunächst durch die Wärmebehandlung nur in einen pastösen Zustand versetzt und alsdann gewalzt. Das Walzen der Antihaftschicht geschieht bei einer Temperatur zwischen 150 und 450° C. Erst nach dem Walzen soll die Antihaftschicht vollständig ausgehärtet werden. Dieses Verfahren ist, da die Antihaftschicht im heißen Zustand gewalzt werden soll, schwierig in der Ausführung und führt nicht zu optimalen Ergebnissen.

Aus der DE 30 05 785 A1 ist ein Verfahren zur Beschichtung eines Substrates mit einer Antihaftschicht bekannt, bei welchem zunächst ein sprühbares Gemisch, enthaltend Polytetrafluorethylen und Perfluoralkoxyharz, auf die Substratoberfläche aufgetragen und das so beschichtete Substrat anschließend einer Wärmebehandlung unterzogen wird. Die Wärmebehandlung erfolgt dabei in zwei Schritten, wobei das beschichtete Substrat zunächst, beispielsweise mit einer Warmluftpistole, getrocknet und daran anschließend bei einer über der Schmelztemperatur der Polymerisate liegenden Temperatur in einem Ofen inkubiert wird. Um nicht-poröse Beschichtungen zu erhalten, werden vor der Wärmebehandlung die flüssigen Beschichtungen mit einer Walze verdichtet. Die Eigenschaften der mit diesem Verfahren erhältlichen Antihaftschichten, insbesondere das Antihaftverhalten und die Verschleißbeständigkeit, genügen nicht bei allen Anwendungen höchsten Anforderungen.

Aufgabe der vorliegenden Erfindung ist es daher ein Verfahren zur Oberflächenbeschichtung zur Verfügung zu stellen, bei dem, verglichen mit denen des Standes der Technik, Antihaftschichten mit erhöhter Verschleißbeständigkeit, besserem Antihaftverhalten und verbesserter Alterungsbeständigkeit erhalten werden.

Die Aufgabe wird erfindungsgemäß bei einem Verfahren der eingangs genannten Art dadurch gelöst, dass das Schichtmaterial zunächst z.B. durch Sintern oder Vernetzen vollständig ausgehärtet und erst dann bei Umgebungstemperatur mittels der Druckausübung verdichtet wird.

"Sintern" im Sinne der vorliegenden Erfindung ist ein Verfahren zum Zusammenbacken von Pulvern zu festen Körpern bei Temperaturen unterhalb der absoluten Schmelztemperatur, wie es beispielsweise in Lueger's Lexikon der Verfahrenstechnik, 1970, Seite 456, beschrieben ist, die hiermit als Referenz eingeführt wird und somit als Teil der Offenbarung gilt. Unter "Umgebungstemperatur" wird eine Temperatur zwischen etwa 10 und 30°C verstanden, wie sie üblicherweise in Gebäuden herrscht.

Das erfindungsgemäße Verfahren ist gegenüber denen des Standes der Technik einfacher auszuführen. Des weiteren wird eine Antihaftschicht mit verbesserten Eigenschaften erhalten. Sie ist weniger porös, was zu einem besseren Antihaftverhalten und einer verbesserten Alterungsbeständigkeit führt, indem geringere Angriffsmöglichkeiten von Fett, Speiseresten und Verunreinigungen bestehen. Die erfindungsgemäß hergestellte Antihaftschicht ist ferner härter und damit kratzfester und verschleißbeständiger als herkömmliche; sie hat außerdem eine erhöhte Korrosionsstabilität.

Das Schichtmaterial der Antihaftschicht kann durch jedes dem Fachmann bekannte Verfahren direkt auf die zu beschichtende Oberfläche aufgebracht werden, beispielsweise durch Aufsprühen einer flüssigen Lösung, Suspension oder Dispersion.

Nach dem Aufbringen des Schichtmaterials wird die beschichtete Oberfläche z.B. gesintert, d.h. bei einer bestimmten, von dem Material der Antihaftschicht abhängigen, Temperatur in einem Ofen, Wärmeschrank oder jedem anderen dem Fachmann zu diesem Zweck bekannten Gerät inkubiert. Hierbei werden jeweils die für das vollständige Aushärten des Schichtmaterials in vernünftiger Zeit erforderlichen Temperaturen angewendet.

Vorzugsweise wird das Schichtmaterial bei der Verdichtung gleichzeitig geglättet, um die genannten Eigenschaften weiter zu verbessern.

Das erfindungsgemäße Verfahren ist hinsichtlich der Beschaffenheit der zu beschichtenden Oberfläche nicht begrenzt; es eignet sich sowohl für die Beschichtung von glatten als auch von aufgerauhten metallenen und nicht-metallenen anorganischen Oberflächen, wie Aluminium, Edelstahl, Al₂O₃, sonstige Keramiken oder Gläser.

Um besonders kratzfeste Beschichtungen zu erhalten, kann, alternativ dazu, die Oberfläche zunächst mit einer Haftgrundschicht und/oder Hartstoffschicht versehen werden, bevor auf diese Beschichtung das Schichtmaterial der Antihaftschicht aufgebracht wird.

Als Schichtmaterial für die Antihaftschicht werden vorzugsweise PTFE und/oder fluorhaltige Lacke/Silikonlacke verwendet.

Es ist auch möglich, bei dem Verdichten des Schichtmaterials in dieses ein z.B. synthetisches, physiologisch unbedenkliches Öl und/oder z.B. pulverförmige Feststoffe als Füllstoffe einzupressen, wodurch die Antihafteigenschaften noch weiter verbessert werden.

Die Verdichtung kann durch jedes dem Fachmann zu diesem Zweck bekannte Werkzeug erfolgen, vorzugsweise durch ein feststehendes oder rollendes, mechanisch, pneumatisch oder hydraulisch gelagertes Druck-, Roll-, Walz-, Kugel-, Press- oder Strahlwerkzeug. Hierbei können auch Schmierstoffe angewendet werden. die feststehenden Werkzeuge können eine glatte, konvexe Oberfläche haben. die rollenden Werkzeuge können z.B. mechanisch oder hydrodynamisch gelagt sein.

Bei bestimmten rotationssymetrischen Oberflächen kann dabei der die Oberfläche tragende Gegenstand bspw. während des Verdichtens des Schichtmaterials rotiert und ein Verdichtungswerkzeug radial an die Kontur der Oberfläche gefahren werden.

Dabei sollte die Rotationsgeschwindigkeit des Gegenstandes groß gegenüber der Vorschubgeschwindigkeit des Verdichtungswerkzeuges sein, so dass eine glatte, weitgehend rillenfreie Oberfläche entsteht. Die Führung des Verdichtungswerkzeuges kann dabei durch NC oder CNC-Steuerung oder Kopieren erfolgen.

Ein weiteres Erfindungsmerkmal besteht darin, dass das Verdichtungswerkzeug kraftgesteuert in Richtung der Oberfläche verstellbar ist. Auf diese Weise lassen sich Unebenheiten oder geometrische Toleranzen ausgleichen und - durch Einstellen der entsprechenden Rückstellkraft - der Verdichtungsgrad für die Antihaftschicht festlegen.

Ein solches Verdichtungswerkzeug kann bspw. eine Feder- oder Feder-/Dämpfer-Einrichtung aufweisen, welche die gewünschte Kraftsteuerung zulässt. Dabei kann die Feder- oder Feder-/Dämpfer-Einrichtung in einer oder zwei Achsen, je nach Kontur der zu beschichtenden Oberfläche, verstellbar sein.

Für die Beschichtung der Seitenwand einer Pfanne ist bspw. eine zweiachsige Verstellung erforderlich. Bei nicht-rotationssymmetrischer Geometrie ist auch eine translatorische "Scan"-Abtastung denkbar.

Die Erfindung bezieht sich ferner auf einen Gegenstand, welcher unter Verwendung eines oder mehrerer der zuvor genannten erfindungsgemäßen Verfahrensmerkmals bzw. Verfahrensmerkmale hergestellt worden ist.

## Patentansprüche

1. Verfahren zum Versehen der Oberfläche eines Gegenstandes, insbesondere eines Haushalts- oder Küchengerätes, mit einer organischen Antihaftschicht, bei welchem ein Schichtmaterial auf die Oberfläche aufgetragen und anschließend durch Druckausübung mechanisch bearbeitet wird, **dadurch gekennzeichnet,** dass das Schichtmaterial zunächst z.B. durch Sintern oder Vernetzen vollständig ausgehärtet und erst dann bei Umgebungstemperatur mittels der Druckausübung verdichtet wird.

2. Verfahren nach Anspruch 1, **dadurch gekennzeichnet,** dass das Schichtmaterial bei der Verdichtung gleichzeitig geglättet wird.

3. Verfahren nach Anspruch 1 oder 2, **dadurch gekennzeichnet,** dass das Schichtmaterial auf eine glatte oder aufgerauhte metallene oder nicht-metallene anorganische Oberfläche aufgebracht wird.

4. Verfahren nach einem der vorhergehenden Ansprüche, **dadurch gekennzeichnet,** dass das Schichtmaterial auf eine auf der Oberfläche vorgesehene Substratschicht aus einer Haftgrundschicht und/oder Hartstoffschicht aufgebracht wird.

5. Verfahren nach einem der vorhergehenden Ansprüche, **dadurch gekennzeichnet,** dass als organisches Schichtmaterial PTFE und/oder fluorhaltige Lacke/Silikonlacke verwendet werden/wird.

6. Verfahren nach einem der vorhergehenden Ansprüche, **dadurch gekennzeichnet,** dass bei dem Verdichten des Schichtmaterials unter Druck in dieses ein Öl, und/oder z.B. pulverförmige Feststoffe eingepresst wird.

7. Verfahren nach einem der vorhergehenden Ansprüche, **dadurch gekennzeichnet,** dass als Verdichtungswerkzeug ein feststehendes oder rollendes, mechanisch, pneumatisch oder hydraulisch gelagertes Druck-, Roll-, Walz-, Kugel-, Press- oder Strahlwerkzeug verwendet wird.

8. Verfahren nach einem der vorhergehenden Ansprüche, **dadurch gekennzeichnet,** dass der die Oberfläche tragende Gegenstand während des Verdichtens des Schichtmaterials rotiert und ein Verdichtungswerkzeug radial an die Kontur der Oberfläche gefahren wird.

9. Verfahren nach Anspruch 8, **dadurch gekennzeichnet,** dass die Rotationsgeschwindigkeit des Gegenstandes groß gegenüber der Vorschubgeschwindigkeit des Verdichtungswerkzeuges ist.

10. Verfahren nach einem der vorhergehenden Ansprüche, **dadurch gekennzeichnet,** dass das Verdichtungswerkzeug kraftgesteuert in Richtung der Oberfläche verstellbar ist.

11. Verfahren nach einem der vorhergehenden Ansprüche, **dadurch gekennzeichnet,** dass das Verdichtungswerkzeug eine Feder- oder Feder-/Dämpfer-Einrichtung aufweist.

12. Gegenstand, **dadurch gekennzeichnet,** dass er unter Anwendung eines Verfahrens nach einem der vorhergehenden Ansprüche mit einer verdichteten Antihaftschicht beschichtet ist.
